Europäisches Patentamt

**(19)** European Patent Office

Office européen des brevets

**(11)** Publication number : **0 331 501 B1**

# EUROPEAN PATENT SPECIFICATION

**(45)** Date of publication of patent specification :
20.01.93 Bulletin 93/03

**(51)** Int. Cl.⁵ : **B60C 9/00, B60C 9/08**

**(21)** Application number : **89302117.0**

**(22)** Date of filing : **02.03.89**

**(54) Pneumatic radial tyres.**

**(30)** Priority : **03.03.88 JP 48539/88**
**24.12.88 JP 324778/88**

**(43)** Date of publication of application :
**06.09.89 Bulletin 89/36**

**(45)** Publication of the grant of the patent :
**20.01.93 Bulletin 93/03**

**(84)** Designated Contracting States :
**DE FR GB IT**

**(56)** References cited :
**FR-A- 2 542 672**
**GB-A- 1 165 853**
**GB-A- 1 205 281**
**GB-A- 1 311 920**
**R. BAUER et al.: "Chemiefaser-lexikon", vol.**
**9, 1983, pages 196-197, 9. Auflage, Deutscher**
**Fachverlag, Frankfurt am Main, DE.**

**(56)** References cited :
**PATENT ABSTRACTS OF JAPAN, vol. 7, no. 55**
**(M-198)[1200], 5th March 1983; & JP-A-57 201**
**703 (SUMITOMO GOMU KOGYO K.K.)10-**
**12-1982**

**(73)** Proprietor : **Bridgestone Corporation**
**1-1, Kyobashi 1-Chome Chuo-Ku**
**Tokyo 104 (JP)**

**(72)** Inventor : **Imai, Isamu**
**2148-15, Kume**
**Tokorozawa City Saitama Pref. (JP)**
Inventor : **Nishikawa, Tomohisa**
**5-5, Ogawahigashi-Cho 3-chome**
**Kodaira City Tokyo (JP)**
Inventor : **Inada, Norio**
**4-3-310, Ogawahigashi-cho 3-Chome**
**Kodaira City Tokyo (JP)**

**(74)** Representative : **Godwin, Edgar James et al**
**MARKS & CLERK 57-60 Lincoln's Inn Fields**
**London, WC2A 3LS (GB)**

## Description

This invention relates to pneumatic radial tires, and more particularly to a pneumatic radial tire having improved high-speed durability and retread durability.

As a carcass ply cord for radial tires, steel cords are mainly used in middle to large size vehicles such as truck and bus or construction vehicles, while nylon, polyester or rayon fiber cords are mainly used in small to middle size vehicles such as small truck, passenger car and the like. The reason why the steel cord is used in the carcass of the tire for the large size vehicles is based on the fact that the steel cord being smallest in the change of physical properties against heat is suitable against large heat generation caused when such a tire is generally used under high internal pressure and high loading. However, the steel cord has a drawback that corrosion is apt to be caused by contacting with water penetrated through outer damage of the tire or included in the inside of the tire. In order to overcome this drawback, the use of aromatic polyamide fiber cord (aramid cord) or the like is attempted instead of the steel cord. In this case, however, the resistance to bending fatigue and the adhesion level are insufficient and the cost is high, so that the use of the aromatic polyamide fiber is not yet generalized as a commodity.

On the other hand, in case of the passenger car tires, there are problems that the nylon fiber cord is insufficient in the creep characteristics, poor in the flat spotability, large in the heat shrinkability, the unevenness and uniformity of the side portion are insufficient and the like. Further, the rayon fiber cord is lowest in the strength, so that it is required to use a great amount of rayon fiber cords as compared with the case of using the polyester fiber cord for obtaining the same strength as the carcass material, and also there are caused problems on the adhesion level and physical properties, particularly strength when storing under moisture atmosphere for a long period of time. On the other hand, the polyester fiber cords are most excellent because of no problems as mentioned above, but have a great problem that the resistance to amine decomposition is poor. This is a phenomenon that the polyester is decomposed by amine component included in the coating rubber for the carcass to lower the molecular weight and hence cause the reduction of strength or adhesion force. Such a phenomenon is naturally accelerated as the temperature rises, which causes problems when the polyester fiber cords are applied to the carcass in not only the large size tires or the like but also the passenger car tires due to the increase of severity through heat as accompanied with the recent trend of high-speed running.

In order to improve the poor resistance to amine decomposition in the polyester fiber cord, there are attempted many methods, such as method of reducing the number of terminal carboxylic groups in the polyester molecule, method of subjecting the polyester fiber cord to a surface treatment with an epoxy series adhesive to form a barrier for the attack of amine from exterior, method of reducing amine component in the rubber compounding as far as possible through the use of synthetic rubber or no use of sulfenamide, thiuram or thiourea series vulcanization accelerator. In these methods, however, the reduction of terminal carboxylic group number is critical, and the surface treatment with the epoxy compound lowers the resistance to bending fatigue in polyester, while the fracture strength inherent to natural rubber is not utilized or the obtention of high modulus through the formation of optimum network is not achieved from the viewpoint of the rubber compounding, so that satisfactory methods are not yet found out.

As mentioned above, the high-speed performances are required in the conventional radial tires with the high-speed running of the vehicles as the paving of roads proceeds. The term "high-speed performances" used herein mainly means a durability during the high-speed running. That is, when the tire is rotated at a high speed, the crown portion of the tire tends to expand in the radial direction by centrifugal force, while the belt portion bears a large tension in the circumferential direction for suppressing the expansion. If the tension becomes large, the belt layer is stretched in the circumferential direction to cause strain between the belt layers, which renders into a breakage strain of the material located between the belt layers to cause separation failure. Therefore, it is enough to make the rigidity of the belt in the circumferential direction large for improving the high-speed durability. For this purpose, it is generally carried out by arranging cords in parallel to the circumferential direction (angle of 0°) as a reinforcing layer for the belt portion, and if necessary, making the width of the reinforcing layer wide or the number of the layer large. Further, it is required that the cord of this reinforcing layer is small in the elongation at the bearing of tension, and does not cause the degradation of adhesion to the surrounding rubber even when being exposed under severe conditions at high temperature, and does not fuse at high temperature. From a viewpoint of these facts, polyhexamethylene adipamide (nylon-6,6) is used as a material of the cord at the present. However, nylon-6,6 cords usually used in such a belt portion are merely diverted from those used as the cord for the conventional carcass ply. In FR-A-2 542 672, which corresponds to the preamble of claim 1, there is proposed only nylon-6,6 cord obtained by reducing only the twisting number to lessen the elongation under a constant tension (see also the corresponding Japanese Patent laid open No. 60-1005). However, there is still no examination on the material for the cord. Concentric sheath-core filaments suitable for tire reinforcement are described in GB-A-1 165 853.

When fibers having less elongation under the bearing of tension, i.e. fibers having a high tensile modulus are used in a tire cord as mentioned above, the outward expanding of the tire due to centrifugal force can be prevented. However, when using fibers having a tensile modulus higher than that of nylon-6,6 fiber, for example, polyethylene terephthalate (PET) fiber, the outward expanding of the tire in the high-speed running can be prevented, but the degradation of adhesion force due to the heat aging inherent to PET is caused through heat generation of the tire during the high-speed running likewise a case of using PET fiber to the aforementioned carcass ply cord and consequently the durability level in the high-speed running is rather decreased.

In EP-A-0 355 822 (priority date 24.08.88, publication date : 28.02.90, cited under Article 54(3) EPC) is disclosed a pneumatic radial tire comprising at least one carcass ply containing organic fiber cords at least two belt layers superimposed about a crown portion of the carcass ply, and at least one additional cord reinforcing layer covering at least each end portion of the outermost belt layer, wherein the cords of said carcass ply and/or said additional cord reinforcing layer comprise twisted composite fibers of sheath-core structure each having polyester as a core portion and polyamide as a sheath portion, the weight ratio of the core portion to sum of the core portion and the sheath portion is within the range of 0.3-0.9, said composite fibers being embedded in a coating rubber, and wherein the said composite fibers are cable twisted and ply twisted so that a twisting coefficient NT represented by the following equation is within the range of 0.15-0.75

$$NT = T \times \sqrt{0.139 \times D/\rho} \times 10^{-3}$$

wherein T is the twisting number of the cord in turns/10 cm, $\rho$ is the specific gravity of the fiber, and D is the total denier of the cord.

It is, therefore the object of the invention to provide pneumatic radial tires reinforced with organic fiber cords holding the aforementioned advantages of polyester fiber cord as compared with nylon and rayon fiber cords and having improved resistance to amine decomposition, which is a disadvantage in the polyester fiber cord.

The inventors have made various studies in order to solve the aforementioned problems and found that the object is achieved according to the invention by the features of claim 1.

The present invention provides a pneumatic radial tire comprising at least one carcass ply containing organic fiber cords arranged in parallel with each other and at a cord angle of 70-90° with respect to an equatorial plane of the tire, at least two belt layers superimposed about a crown portion of the carcass ply, and at least one additional cord reinforcing layer covering at least each end portion of the outermost belt layer, characterized in that the cords of said carcass ply and/or said additional cord reinforcing layer comprise twisted composite fibers of sheath-core structure each having polyester as a core portion and polyamide as a sheath portion, in which the polyester as the core portion has an intrinsic viscosity (I.V.) of not less than 0.8 and the weight ratio of the core portion to sum of the core portion and the sheath portion is within the range of 0.3-0.9, said composite fibers being embedded in a coating rubber containing not less than 50% of polyisoprene rubber as a rubber component, and in that the said composite fibers are cable twisted and ply twisted so that a twisting coefficient NT represented by the following equation is within the range of 0.2-0. 6:

$$NT = T \times \sqrt{0.139 \times (1/2D)/\rho} \times 10^{-3}$$

wherein T is the twisting number of the cord in turns/10 cm, $\rho$ is the specific density of the fiber, and D is the total denier of the cord.

The invention will be described with reference to the accompanying drawings, wherein:

Fig. 1 is a perspective view partly shown in section of a right half portion of a first embodiment of the pneumatic radial tire according to the invention; and

Fig. 2 is a perspective view partly shown in section of a right half portion of a second embodiment of the pneumatic radial tire according to the invention.

The composite fibers of sheath-core structure as mentioned above are previously known as a material for clothing, and give a self-crimpability based on the difference in heat shrinkability between polyester and polyamide and a hygroscopicity to polyester, but are not intended to improve the resistance of polyester to amine decomposition (Society of Japan Fiber and Machine, vol. 34, No. 7, 1981, pp 1-11).

According to the invention, polyester constituting the core portion is usually polyethylene terephthalate (PET) and has an intrinsic viscosity (I.V.) of not less than 0.8. When the intrinsic viscosity is less than 0.8, sufficient strength as a cord is not obtained.

As polyamide constituting the sheath portion, mention may be made of nylon-6,6, nylon-6, nylon-4,6 and the like. Among them, nylon-6,6 and nylon-6 are preferable.

The weight ratio of the core portion to sum of the core portion and the sheath portion is necessary to be not less than 0.3. When the weight ratio is less than 0.3, the heat shrinkability approaches to that of polyamide and badly affects the unevenness of side portion and the uniformity in the tire. On the other hand, when the sheath portion of polyamide such as nylon-6,6 or the like is too thin, the peeling is apt to be caused and the effect sufficient to improve the resistance to amine decomposition is not obtained, so that the upper limit of the weight ratio is preferable to be about 0.9 considering the sufficient effect and strength of the sheath portion.

The sheath-core type fibers or composite fibers used in the invention can be produced by the conventionally known method. In this case, it is preferable that the position of the core portion in the composite fiber is not eccentrical for advantageously achieving the resistance to amine decomposition. Further, such organic composite fibers are subjected to cable twisting and ply twisting so as to satisfy the twisting coefficient NT of 0.2~0.6 times per 10 cm, whereby the organic fiber cords are produced. When the twisting coefficient NT is less than 0.2, the sufficient resistance to bending fatigue as a cord is not obtained, while when it is more than 0.6, sufficient modulus and creep properties are not obtained.

When the thus obtained organic fiber cords are used as a cord for the carcass ply, they are arranged in parallel with each other and embedded in a coating rubber to form a carcass ply. In order to sufficiently develop the effect of the invention, it is preferable that the coating rubber contains not less than 50% of polyisoprene rubber as a rubber component, which is made possible to maintain the cords at low temperature as far as possible when advantageously improving the resistance of polyester to amine decomposition. That is, not less than 50% of polyisoprene rubber should be compounded as a rubber component for giving sufficient rebound resilience against the desired modulus and fracture strength to the coating rubber so as to suppress heat generation of the rubber-cord composite body. The polyisoprene rubber includes natural rubber (NR), synthetic polyisoprene rubber and a blend thereof. Among them, natural rubber is generally preferable. The other remaining rubber component is another diene series rubber such as styrene-butadiene copolymer rubber (SBR) and/or polybutadiene rubber (BR). In the formation of the carcass ply, the above organic fiber cords are generally subjected to an adhesive treatment usually used in the polyamide fiber cord and then embedded in the coating rubber.

The thus obtained carcass ply can be applied to a radial tire for passenger cars comprising at least one carcass ply. Further, this carcass ply is applicable to radial tires for small size truck or large size truck and bus comprising plural carcass plies, at least one of which plies being wound around each of a pair of bead cores from inside of the tire toward outside thereof to form a turnup portion.

The composite fiber cords of the sheath-core structure consisting of polyethylene terephthalate (PET) and polyamide exhibit elastic properties equal to those of PET and adhesion force, particularly adhesion force at high temperature equal to that of polyamide. In this connection, it has been found that when the composite fiber cords previously subjected to a dipping treatment are embedded in parallel to the circumferential direction between the outermost belt layer and the tread rubber in the tread portion of the radial tire as an additional cord reinforcing layer, the outward expanding quantity can be largely controlled as compared with the case of using nylon-6,6 cords and is substantially equal to that of a case of using PET cords. Furthermore, the high-speed durability of the tire using the composite fiber cords is considerably improved with the reduction of the expanding quantity and is fairly higher than that of the tire using the PET cords.

As another preferred embodiment of the invention, therefore, there is a pneumatic radial tire comprising a carcass of radial structure, plural belt cord layers (cord A) superimposed around a crown portion of the carcass, cords of which layers being crossed with each other, and at least one additional cord reinforcing layer arranged between the outermost belt layer and the tread rubber so as to cover at least each end portion of the outermost belt layer and containing cords (cord B) arranged in parallel to the circumferential direction, wherein the cord B is a cord comprised of the above composite fiber of sheath-core structure and has an elongation ($\Delta E$) at 2.25 g/d of not more than 0.8% and a strength of not less than 5.5 g/d as a cord in the tire product.

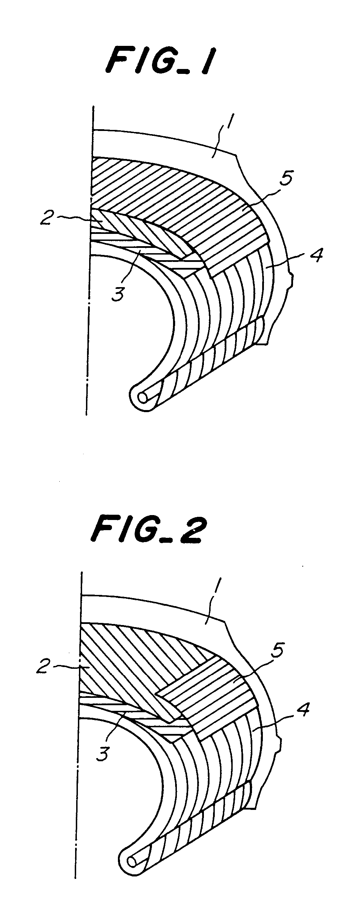

In Fig. 1 is shown a first preferred embodiment of the pneumatic radial tire according to the invention, wherein numeral 1 is a tread rubber, numerals 2 and 3 belt cord layers (cord A), numeral 4 a carcass ply, and numeral 5 an additional cord reinforcing layer (cord B). In the illustrated tire, cords of the two belt cord layers 2 and 3 are crossed with each other with respect to the equatorial plane of the tire, and the single cord reinforcing layer 5 is disposed between the outermost belt cord layer 2 and the tread rubber 1 and has width wider than those of the belt cord layers 2 and 3 so as to cover the whole of the belt cord layers 2 and 3. Moreover, the number of the belt layers and the number of the additional cord reinforcing layers are not limited to the above illustrated embodiment and may be increased, if necessary. Of course, the width of the additional cord reinforcing layer may be changed, if necessary.

In Fig. 2 is shown another preferred embodiment of the pneumatic radial tire according to the invention. This tire is a modified embodiment of Fig. 1, wherein the central portion in widthwise direction of the cord reinforcing layer 5 is removed so as to cover only each end portion of the belt cord layers 2 and 3. In this case, such a pair of cord reinforcing layer segments may be used by combining with the additional cord reinforcing layer 5 shown in Fig. 1.

The improvement of the resistance to amine decomposition, which is a drawback of the polyester fiber cord, is effectively achieved by using the composite fiber of sheath-core structure consisting of polyester as a core portion and polyamide as a sheath portion to prevent or reduce the contact of the cord with amine and using a coating rubber containing not less than 50% of polyisoprene rubber as a rubber component to control the temperature rising of the coating rubber and hence make the degradation rate of the polyester small. Further, the intrinsic viscosity of polyester, weight ratio of core portion to sum of core portion and sheath portion and the twisting coefficient NT are controlled within particular ranges, respectively, whereby the merits inherent to polyester can be well balanced to solve the aforementioned problems of the conventional technique.

The invention will be described in detail with reference to the following examples and comparative examples.

Preparation of composite fiber

Polyethylene terephthalate (PET) chips having intrinsic viscosities (I.V.) of 0.9, 1.0 and 1.1 as measured in orthochlorophenol (25°C) and polyhexamethylene adipamide (nylon-6,6) chips having a relative viscosity of 2.3 as measured in sulfuric acid were used as a starting material and then spun by means of an apparatus similar to a spinning apparatus disclosed in Japanese Patent Application Publication No. 44-18,369 to form a composite fiber of sheath-core structure consisting of PET as a core portion and nylon-6,6 as a sheath portion and having a total denier of 1500. In this case, the nozzle diameter in the spinneret and the amount of polymer extruded were adjusted to vary the weight ratio of PET/nylon-6,6. The measurement of I.V. of PET and weight ratio of PET/nylon-6,6 in the resulting composite fiber were carried out by the following methods. That is, the I.V. of PET was determined by dissolving out nylon-6,6 layer (sheath portion) from the composite fiber with formic acid and then measuring I.V. in orthochlorophenol (25°C). At the same time, the weights of the core portion and the sheath portion were measured to determine the weight ratio. The confirmation of the sheath-core structure was carried out by means of a scanning type electron microscope (SEM) and a transmission type optical microscope. The measured results are shown in the following Table 1.

## Table 1

| | | A | B | C | D |
|---|---|---|---|---|---|
| Kind of polymer | core | PET | PET | PET | PET |
| | sheath | nylon-6,6 | nylon-6,6 | nylon-6,6 | nylon-6,6 |
| I.V. (PET) *1 | | 0.7 | 0.9 | 0.8 | 0.9 |
| Number of terminal carboxyl group | | 30 | 30 | 30 | 30 |
| Weight ratio of PET/PET+ nylon-6,6 | | 0.55 | 0.45 | 0.55 | 0.50 |
| Specific gravity | | 1.32 | 1.30 | 1.32 | 1.31 |
| Total denier (d) | | 1507 | 1505 | 1508 | 1506 |

*1 unit: equivalent/$10^6$ g

In Table 1, the fibers C and D corresponded to composite fibers defined in the invention.

Preparation of organic fiber cord

Each of the composite fibers A to D shown in Table 1 and commercially available PET fiber (total denier: 1500 d, Cord Nos. 1 and 8 of the following Table 2) was used to form a twisted cord having a twisting coefficient NT as shown in Table 2. The twisted cord was subjected to a usual R.F.L treatment to form a cord for tire. For the comparison, the conventional PET cord having a very small terminal carboxylic group number (Cord No.

2 of Table 2) and the pretreated PET cord obtained by treating PET fiber with an epoxy compound immediately after the spinning were used to obtain results as shown in Table 2. The adhesion test and amine decomposition test of these cords were carried out by embedding each of these cords in a coating rubber as shown in the following Table 3 and then heating at 170°C for 3 hours.

## Table 2

|  |  | 1 | 2 | 3 | 4 | 5 | 6 | 7 | 8 | 9 |
|---|---|---|---|---|---|---|---|---|---|---|
| Green cord | fiber used | PET | PET | PET pre-treatment | A | B | C | D | PET | PET pre-treatment |
|  | $-CO_2H$ (equivalent/$10^6$ g) | 30 | 7 | 15 | 30 | 30 | 30 | 30 | 30 | 15 |
|  | denier (d) | 1500/2 | 1500/2 | 1500/2 | 1500/2 | 1500/2 | 1500/2 | 1500/2 | 1500/2 | 1500/2 |
|  | Twisting number (ply twist)(turns/10 cm) | 39 | 39 | 39 | 39 | 39 | 39 | 39 | 39 | 39 |
|  | Twisting number (cable twist)(turns/10 cm) | 39 | 39 | 39 | 39 | 39 | 39 | 39 | 39 | 39 |
|  | Twisting coefficient (ply twist) | 0.48 | 0.48 | 0.48 | 0.49 | 0.49 | 0.49 | 0.49 | 0.48 | 0.48 |
|  | Twisting coefficient (cable twist) | 0.48 | 0.48 | 0.48 | 0.49 | 0.49 | 0.49 | 0.49 | 0.48 | 0.48 |
| Dipped cord | tenacity (kg) | 22.0 | 22.5 | 21.6 | 17.5 | 21.5 | 21.3 | 21.7 | 22.0 | 21.6 |
|  | elongation at 6.75 kg (%) | 6.0 | 6.0 | 6.0 | 6.0 | 6.0 | 6.0 | 6.0 | 6.0 | 6.0 |
|  | elongation at break (%) | 20.0 | 20.7 | 19.5 | 14.5 | 17.0 | 17.0 | 17.2 | 20.0 | 19.5 |
|  | heat shrinkage (%) | 4.0 | 4.0 | 4.0 | 4.5 | 6.5 | 4.5 | 5.0 | 4.0 | 4.0 |
|  | coating rubber used | b | b | b | b | b | b | b | a | a |
|  | initial adhesion force (kg/cord) | 2.5 | 2.4 | 2.7 | 2.4 | 2.4 | 2.4 | 2.4 | 2.5 | 2.7 |
|  | adhesion force after heat aging (kg/cord)*1 | 0.5 | 0.7 | 0.6 | 2.0 | 2.0 | 2.2 | 2.2 | 0.9 | 1.0 |
|  | (retention) (%) | 20 | 29 | 22 | 83 | 83 | 92 | 92 | 36 | 37 |
|  | tenacity after heat aging (kg) *1 | 5.0 | 8.0 | 10.0 | 15.0 | 20.0 | 20.0 | 20.5 | 7.0 | 13.0 |
|  | (retention) (%) | 23 | 36 | 46 | 86 | 93 | 94 | 94 | 32 | 60 |

*1  heat aging condition: 170°C × 3h

EP 0 331 501 B1

Table 3

| Compounding recipe, properties | a | b |
|---|---|---|
| natural rubber | 45 | 55 |
| styrene-butadiene copolymer rubber | 35 | 25 |
| polybutadiene rubber | 20 | 20 |
| carbon black HAF | 40 | 40 |
| stearic acid | 2.0 | 2.0 |
| antioxidant *1 | 1.0 | 1.0 |
| ZnO | 5.0 | 5.0 |
| antioxidant *2 | 0.5 | 0.5 |
| DM *3 | 0.5 | 0.5 |
| Nobs *4 | 0.4 | 0.3 |
| sulfur | 3.0 | 3.0 |
| tenacity (kg/cm²) | 240 | 270 |
| 100% modulus (kg/cm²) | 35 | 37 |
| elongation at break (%) | 450 | 490 |
| resilience | 55.0 | 65.0 |

*1  N-(1,3-dimethylbutyl)-N'-phenyl-p-phenylenediamine

*2  2,2,4-trimethyl-1,2-dihydroquinone polymer

*3  dibenzothiazyl disulfide

*4  N-oxydiethylene-2-benzothiazole

Examples 1-2, Comparative Examples 1-7

The dipped cords and coating rubber shown in Table 2 were subjected to a topping so as to have a cord number (end count) per unit width (5 cm) of 50 cords, whereby a carcass ply was produced. Then, a radial tire for passenger car having a tire size of 185SR 14 was manufactured by using the above carcass ply and two steel cord layers as a belt in the usual manner. The resulting tire was tested by the following methods.

Sidewall unevenness: The unevenness of the sidewall portion was visually observed when the tire was inflated under an internal pressure of 2.2 kg/cm².

Water pressure value: a value when the tire was broken or climbed over a rim by filling water to the inside of the tire.

High-speed durability: evaluated according to a test of FMVSS - No. 119.

Long run drum: The test tire was run on a drum of 2 m in diameter over 50,000 km (speed: 65 km/h) under a normal internal pressure and 120% of a normal load, and thereafter the carcass ply cord was taken out from the tire. Then, the tenacities of the cord at shoulder portion and bead portion were measured. The retention of residual tenacity was a percentage value when the lower value among the measured values was divided by a tenacity value of cord before the running. As to the adhesion force, the rubber piece containing the cords was cut out from the test tire after the running and then a strain was measured when the cord was peeled off from the rubber piece. The retention of adhesion force after heat aging was a percentage value when the measured value was divided by a strain value before the running.
The test results are shown in the following Table 4.

Table 4

| | Comparative Example 1 | Comparative Example 2 | Comparative Example 3 | Comparative Example 4 | Comparative Example 5 | Example 1 | Example 2 | Comparative Example 6 | Comparative Example 7 |
|---|---|---|---|---|---|---|---|---|---|
| Kind of cord used (Table 2) | 1 | 2 | 3 | 4 | 5 | 6 | 7 | 8 | 9 |
| Sidewall unevenness | good | good | good | good | bad | good | good | good | good |
| Water pressure value (kg/cm$^2$) | 15.0 | 15.0 | 15.8 | 11.0 | 15.2 | 15.0 | 16.1 | 15.5 | 15.3 |
| Trouble state at water pressure value | rim climb | rim climb | rim climb | ply breakage | rim climb | rim climb | rim climb | rim climb | rim climb |
| High-speed durability (km/h) | 193 | 193 | 193 | 217 | 217 | 217 | 217 | 185 | 185 |
| Long run drum ($\times 10^4$ km) Retention of residual tenacity (%) | 5.0 40 | 5.0 45 | 5.0 50 | 5.0 95 | 5.0 95 | 5.0 96 | 5.0 95 | 5.0 31 | 5.0 34 |
| Retention of adhesion force after heat aging (%) | 50 | 51 | 57 | 96 | 97 | 96 | 97 | 45 | 48 |

The tire using the cord of Table 2, No. 5 (Comparative Example 5) is conspicuous in the sidewall unevenness to the tire under the inflation of the internal pressure and comes into problem as a commercial product. Further, the tire of Comparative Example 4 causes cord breakage at the shoulder portion of the carcass ply in the water pressure test, so that the safety of the carcass ply is low. Moreover, the cord durability, i.e. retention of tenacity and adhesion force in Comparative Examples 1-3, 6 and 7 is low. From these facts, it is apparent that the tires of Examples 1 and 2 show a high durability.

Examples 3-4, Comparative Examples 8-14

The dipped cords and coating rubber shown in Table 2 were subjected to a topping so as to have a cord number (end count) per unit width (5 cm) of 50 cords, whereby a carcass ply was produced. Then, a radial tire for truck and bus having a tire size of 1000R20 was manufactured by using the above carcass ply. In this case, the carcass was comprised of five carcass plies and three carcass plies among them were turned up around the bead wire from inside toward outside and the remaining outer carcass plies were turned up from outside toward inside. The resulting tire was tested by the following method.

Sidewall unevenness: The unevenness of the sidewall portion was visually observed when the tire was inflated under an internal pressure of 12 kg/cm². 

Water pressure value: same as in Example 1

Stepwise load durability: The test tire was run on a drum of 3.5 m in diameter at 65 km/h under a normal internal pressure and 80% of a normal load for 8 hours, under 100% load for 12 hours, under 120% load for 24 hours, and further run by increasing a load every 20%. The durability was indicated by a running distance (km) till the breakage of the tire.

Long run drum: The test tire was run on a drum of 3.5 m in diameter at a speed of 60 km/h over 70,000 km under a normal internal pressure and 120% of a normal load. Thereafter, the measurement was carried out by the same method as in Example 1.

The test results are shown in the following Table 5.

Table 5

| | Comparative Example 8 | Comparative Example 9 | Comparative Example 10 | Comparative Example 11 | Comparative Example 12 | Example 3 | Example 4 | Comparative Example 13 | Comparative Example 14 |
|---|---|---|---|---|---|---|---|---|---|
| Kind of cord used (Table 2) | 1 | 2 | 3 | 4 | 5 | 6 | 7 | 8 | 9 |
| Sidewall unevenness | good | good | good | good | bad | good | good | good | good |
| Water pressure value $(kg/cm^2)$ | 30.0 | 30.0 | 30.0 | 30.0 | 30.0 | 30.0 | 30.0 | 30.0 | 30.0 |
| Trouble state at water pressure value | rim climb | rim climb | rim climb | ply breakage | rim climb | rim climb | rim climb | rim climb | rim climb |
| Stepwise load durability (km) | 5500 | 5400 | 5500 | 7000 | 7250 | 7100 | 7200 | 5600 | 5500 |
| Long run drum ($\times 10^4$ km) | 7.0 | 7.0 | 7.0 | 7.0 | 7.0 | 7.0 | 7.0 | 7.0 | 7.0 |
| Retention of residual tenacity (%) | 30 | 33 | 40 | 90 | 91 | 92 | 90 | 28 | 34 |
| Retention of adhesion force after heat aging (%) | 20 | 22 | 30 | 85 | 90 | 88 | 86 | 20 | 22 |

As seen from the results of Table 5, the tires of Examples 3 and 4 exhibit a high durability as compared with the comparative tires likewise the case of Table 4.

Examples 5-8, Comparative Examples 15-17

Seven tires (tire size: 175/70R 13) provided with a separate-type cord reinforcing layer 5 (cord B) covering only each end portion of belt cord layers 2 and 3 (cord A) as shown in Fig. 2 and having a structure as shown in the following Table 6 were manufactured as follows. In the belt layers 2 and 3, steel cords (1×5×0.23 mm) were used as the cord A. The carcass 4 was comprised of a single ply containing polyethylene terephthalate (PET) fiber cords (1500 d/3, 30×30). Further, the cord reinforcing layer 5 had an end count of 50 cords/5 cm, wherein nylon-6,6 (66Ny) fiber cord, PET fiber cord, or composite fiber cord obtained by varying a weight ratio of PET as a core to 66Ny as a sheath was used as the cord B. The properties of cord and the tire properties were evaluated with respect to the resulting test tires by the following methods. The measured results are also shown in Table 6.

Heat shrinkage: It was represented by a percentage obtained by dividing a length of the cord shrinked after being left to stand at 177°C for 30 minutes by the original length of the cord according to JIS L1017.

Adhesion force: The cords were embedded in the coating rubber and vulcanized. Then, the resistance force when the cord was peeled off from the vulcanizate was measured according to JIS K6301.

Adhesion force after vulcanization at high temperature for long time: The cords were embedded in the coating rubber and then vulcanized at 180°C for 3 hours. Thereafter, the resistance force when the cord was peeled off from the vulcanizate was measured according to JIS K6301. This was used as an indication showing a so-called adhesion force in the heat aging.

Tenacity after vulcanization: The cords were embedded in the coating rubber and then vulcanized at 180°C for 3 hours. The tenacity of the cord taken out from the vulcanizate was measured by means of an autograph.

Absolute dry test: After the drying of the dipped cord, the tenacity, elongation at 2.25 g/d and elongation at break of the cord were measured by means of an autograph according to JIS L1017.

Elongation at 2.25 g/d of cord in tire: After the cord B was taken out from the tire, the elongation at 2.25 g/d was measured by means of an autograph.

Retention of tenacity after vulcanization: a percentage of a value obtained by dividing the tenacity of the cord after the vulcanization by the tenacity of the dipped cord.

High-speed test: The test tire was run by increasing a speed at a rate of 8 km/h every 30 minutes according to a test method of FMVSS No. 109. The speed (km/h) and time (minutes) at the occurrence of trouble were measured.

Expanding test at high speed: When the test tire subjected to an internal pressure of 1.9 kg/cm$^2$ was run at a speed of 200 km/h under a load of 50 kg, the expanding quantity of the tread end portion was measured by photographing. It was evaluated as a difference between the expanding quantity at a speed of 40 km/h as a standard and the expanding quantity at a speed of 200 km/h.

EP 0 331 501 B1

## Table 6

| | | Comparative Example 15 | Comparative Example 16 | Example 5 | Example 6 | Example 7 | Example 8 | Comparative Example 17 |
|---|---|---|---|---|---|---|---|---|
| Cord B (twisted cord) | material | 66Ny | PET | PET/66Ny =75/25 | PET/66Ny =60/40 | PET/66Ny =50/50 | PET/66Ny =30/70 | PET/66Ny =20/80 |
| | denier (twisting number) | 1260 d/2 (39×39) | 1260 d/2 (40×40) | 1260 d/2 (40×40) | 1260 d/2 (40×40) | 1260 d/2 (40×40) | 1260 d/2 (40×40) | 1260 d/2 (40×40) |
| Cord B (dipped cord) | tenacity (kg/cord) *1 | 23.5 | 21.6 | 21.3 | 20.5 | 20.5 | 20.8 | 21.0 |
| | strength (g/d) *1 | 8.8 | 6.3 | 6.2 | 6.2 | 6.3 | 6.3 | 6.3 |
| | elongation at 2.25 g/d (%) *1 | 6.5 | 4.2 | 4.0 | 4.1 | 4.2 | 4.8 | 5.5 |
| | elongation at break (%) *1 | 19.3 | 14.8 | 12.6 | 12.8 | 13.0 | 13.9 | 15.0 |
| | heat shrinkage (%) | 6.80 | 3.90 | 5.05 | 5.30 | 5.35 | 5.50 | 5.90 |
| | adhesion force (kg/cord) | 2.45 | 1.86 | 2.63 | 3.00 | 3.06 | 2.78 | 2.81 |
| | adhesion force after vulcanization at high temperature for long time (kg/cord) | 3.58 | 0.12 | 3.40 | 4.02 | 3.71 | 3.63 | 3.59 |
| | tenacity after vulcanization (kg/cord) | 22.0 | 15.8 | 19.7 | 18.9 | 19.0 | 19.3 | 19.7 |
| | retention of tenacity after vulcanization (%) | 93.6 | 73.1 | 92.5 | 92.2 | 92.7 | 92.8 | 93.8 |
| | strength after vulcanization (g/d) | 8.2 | 4.57 | 5.7 | 5.7 | 5.8 | 5.8 | 5.9 |
| Tire properties | High-speed test (km/h) | 210 (25 min.) | 202 (2 min.) | 226 (28 min.) | 226 (21 min.) | 226 (10 min.) | 226 (8 min.) | 218 (5 min.) |
| | Trouble state | chunk due to belt end separation | chunk due to belt end separation | chunk due to belt end separation | chunk due to belt end separation | chunk due to belt end separation | chunk due to belt end separation | chunk due to belt end separation |
| | Expanding test (mm) | 4.20 | 2.65 | 2.85 | 2.70 | 2.90 | 3.05 | 3.85 |
| | Elongation at 2.25 g/d of cord in tire (%) | 8.2 | 4.7 | 4.7 | 4.9 | 5.2 | 6.1 | 7.1 |

*1 test according to absolute dry test of JIS L1017

In Examples 5 to 8, composite fibers obtained by varying the weight ratio of PET/(PET + 66Ny) to 0.75, 0.60, 0.50 and 0.30 are used as the cord B. In these composite fiber cords, the adhesion force and the adhesion force after the vulcanization at high temperature for long time are good as compared with those of PET cord and 66Ny cord, and the heat shrinkage is substantially a middle value between PET cord and 66Ny cord as seen from Table 6. Further, the tenacity after the vulcanization is largely improved as compared with that of PET cord. On the other hand, as regards the tire properties, the high-speed running performance is a level of 224 km/h, and the expanding quantity at high speed is controlled to an extent approximately equal to that of PET cord.

From the results of Examples 5 to 8, it is understood that the composite fiber consisting of PET as a core and 66Ny as a sheath is suitable as a cord used in the high performance tires capable of running at higher speed.

In Comparative Example 15, 66Ny cord is used as the cord B, while in Comparative Example 16, PET cord is used as the cord B. As seen from Table 6, Comparative Example 15 shows good results on the adhesion force after the vulcanization at high temperature for long time and the tenacity after the vulcanization, but the expanding quantity at high speed becomes larger because of a large elongation at 2.25 g/d in tire, so that there is a fear on the durability at higher speed. Further, Comparative Example 16 controls the expanding quantity at high speed to a low value, but the heat resistance, adhesion properties and resistance to heat aging of the cord are considerably poor as seen from the results on the adhesion force after the vulcanization at high temperature for long time and the tenacity after the vulcanization, so that the high-speed running performance is as low as a level of 202 km/h (2 minutes) and the tire can not be put into practical use.

In Comparative Example 17, the composite fiber having a weight ratio of PET to (PET + 66Ny) of 0.2 is used as the cord B. All of the adhesion force, adhesion force after the vulcanization at high temperature for long time and tenacity after the vulcanization are good as compared with those of PET cord, but the elongation at 2.25 g/d becomes larger as the weight ratio of 66Ny increases in the ratio of PET to 66Ny. Therefore, the expanding quantity of the tire at high speed becomes large and further the level of the high speed test is 218 km/h (5 minutes) and is lower than those of Examples 5 to 8.

In general, as the tension at the dipping treatment is increased, the initial modulus of elasticity can be made large (the elongation at 2.25 g/d becomes conversely small). However, as the weight ratio of 66Ny in the composite fiber consisting of PET as a core and 66Ny as a sheath is increased, the initial modulus of elasticity becomes larger (the elongation at 2.25 g/d becomes smaller), so that when the tension is increased in the dipping treatment, the breakage of the cord or the lowering of the tenacity in the dipped cord is caused and consequently the dipped cord having the given high modulus of elasticity (low elongation) can not be obtained.

When the elongation at 2.25 g/d of the dipped cord is compared with the elongation at 2.25 g/d of the cord in tire in Table 6, it is understood that the change in the elongation of 66Ny cord is large as compared with that of PET cord. That is, in the 66Ny cord, the elongation in tire is larger than the elongation at the dipped state (the modulus of elasticity becomes small). This tendency is true in the composite fiber of sheath-core structure using PET and 66Ny. For example, in the cord comprised of such a composite fiber, as the weight ratio of 66Ny becomes large, the elongation of the cord in tire is large and the changing quantity thereof is also large. This results from a fact that the initial elongation of the heat shrinkable organic fiber cord in the tire becomes generally large through steps of dipping, rubber topping, shaping and vulcanizing for the manufacture of tire products and the modulus of elasticity lowers. That is, the orientation of molecular chain in the non-crystal portion of the cord is mainly mitigated by heat hystresis in the calendering and vulcanizing and hygroscopicity. Moreover, when the tire after the vulcanization is subjected to an application of internal pressure of a so-called PCI step to give a tension to the cords, the modulus of elasticity is recovered to a certain extent, but is not recovered up to that at the dipped state, so that the increase of initial elongation (decrease of initial modulus of elasticity) remains in the tire cord. When the increased amount of initial elongation is examined between PET and 66Ny, it is large in the 66Ny cord having high heat shrinkage and hygroscopicity than in the PET cord, and the decreasing degree of the initial modulus of elasticity of 66Ny cord from the dipping to tire production is large as compared with that of PET cord.

From the above, it has been confirmed that the practically usable range for the weight ratio of PET to (PET + 66Ny) in the composite fiber of sheath-core structure is $0.3 \leq PET/(PET + 66Ny) \leq 0.9$ and the cord in the tire product has an elongation at 2.25 g/d of not more than 8.0% and a strength of not less than 5.5 g/d.

When PET/(PET + 66Ny) > 0.9, the amount of PET becomes larger and consequently the decrease of tenacity after the vulcanization is large and the rubber durability is poor, while the nylon sheath layer is too thin and consequently the nylon layer is apt to peel off from the composite fiber and the decrease of tenacity after the running at high speed is large. Therefore, this weight ratio can not be put into practical use.

When PET/(PET + 66Ny) < 0.3, the amount of 66Ny is large and the initial modulus of elasticity becomes small (the initial elongation becomes large) as previously mentioned. For this end, the expanding quantity of the tire at high speed becomes large and the high-speed durability lowers, so that this weight ratio can not also be put into practical use.

Moreover, it has been confirmed that the effect of the invention is developed in not only the layer structure but also the full cap belt structure.

In the pneumatic radial tires according to the invention, the cords comprised of organic composite fiber having particular sheath-core structure of polyester and polyamide are used as a tire reinforcement. Particularly, the carcass ply is comprised by embedding the above cords in a coating rubber containing not less than 50% of polyisoprene as a rubber component, whereby the resistance to amine decomposition, which is a drawback of the polyester, is considerably improved without causing the conventional drawbacks and hence the high-speed durability and retread durability of the tire are improved.

Further, the cords of the above composite fiber are used in the cord reinforcing layer 5 as shown in Figs. 1 and 2, whereby the high-speed durability and the control of the expanding quantity at high speed can considerably be improved as compared with the case of using the conventional fiber cords (PET, polyamide or the like).

As mentioned above, according to the invention, the use of the above organic composite fiber cords is made possible to make large the initial modulus of elasticity of the cord in tire product (initial elongation is small) and also the good adhesion between rubber and cord at high temperature is obtained. That is, the invention provides pneumatic radial tires reinforced with cords possessing properties of PET as elastic properties and properties of polyamide as an adhesion force.

## Claims

1. A pneumatic radial tire comprising at least one carcass ply (4) containing organic fiber cords arranged in parallel with each other and at a cord angle of 70-90° with respect to an equatorial plane of the tire, at least two belt layers (2, 3) superimposed about a crown portion of the carcass ply (4), and at least one additional cord reinforcing layer (5) covering at least each end portion of the outermost belt layer (2), characterized in that the cords of said carcass ply (4) and/or said additional cord reinforcing layer (5) comprise twisted composite fibers of sheath-core structure each having polyester as a core portion and polyamide as a sheath portion, in which the polyester as the core portion has an intrinsic viscosity (I.V.) of not less than 0.8 and the weight ratio of the core portion to sum of the core portion and the sheath portion is within the range of 0.3-0.9, said composite fibers being embedded in a coating rubber containing not less than 50% of polyisoprene rubber as a rubber component, and in that the said composite fibers are cable twisted and ply twisted so that a twisting coefficient NT represented by the following equation is within the range of 0.2-0.6:

$$NT = T \times \sqrt{0.139 \times (1/2D)/\rho} \times 10^{-3}$$

wherein T is the twisting number of the cord in turns/10 cm, $\rho$ is the specific density of the fiber, and D is the total denier of the cord.

2. A tire as claimed in claim 1, characterized in that the said weight ratio of the core portion to sum of the core portion and the sheath portion is within the range of 0.5-0.6.

3. A pneumatic radial tire as claimed in claim 1 or 2, characterized in that the additional cord reinforcing layer (5) comprises cords made from the said composite fiber, provided that such cord has an elongation at 2.25 g/d in tire of not more than 8.0% and a strength of not less than 5.5 g/d.

4. A pneumatic radial tire as claimed in any of claims 1 to 3, characterized in that the additional cord reinforcing layer (5) extends over at least the whole of the outermost belt layer (2).

## Patentansprüche

1. Ein pneumatischer Radialreifen mit wenigstens einer Karkassenlage (4) die parallel zueinandner und in einem Cordwinkel von 70 - 90°, bezogen auf eine Äquatorialebene des Reifens, angeordnete organische Fasercords enthält, wenigstens zwei Gürtellagen (2,3), die über einen Scheitelabschnitt der Karkassenlage aufeinander gelegt sind, und wenigstens einer zusätzlichen Cordverstärkungsschicht (5), die wenigstens jeden Endbereich der äußersten Gürtellage (2) bedeckt,
   **dadurch gekennzeichnet,**

daß die Cords der Karkassenlage (4) und/oder die zusätzliche Cordverstärkungssicht (5) gezwirnte zusammengesetzte Fasern einer Kern-Mantel-Struktur umfassen, mit jeweils Polyester als Kernanteil und Polyamid als Mantelanteil, wobei der Polyester als der Kernanteil eine eigentliche Viskosität (I.V.) von nicht weniger als 0,8 hat und das Gewichtsverhältnis des Kernanteils zur Summe aus Kern- und Mantelanteil im Bereich von 0,3 bis 09 liegt, und wobei diese zusammengesetzten Fasern in einen Überzuggummi eingebettet sind, der nicht weniger als 50 % an Polyisopropengummi als Gummikomponente hat, und daß diese zusammengesetzten Fasern kabelgezwirnt und lagengezwirnt sind, so daß ein Zwirnkoeffizient NT, der durch die nachstehende Gleichung

$$NT = T \times \sqrt{0,139 \times (1/2D) \, \rho} \times 10^{-3}$$

repräsentiert ist, im Bereich von 0,2 bis 0,6 liegt, worin T die Zwirnzahl des Cords in Drehungen/10 cm, $\rho$ die spezifische Dichte der Faser und D der Gesamttiter des Cords ist.

2. Ein Reifen nach Anspruch 1, dadurch gekennzeichnet, daß das Gewichtsverhältnis des Kernanteils zur Summe aus Kern- und Mantelanteil im Bereich von 0,5 bis 0,6 liegt.

3. Ein pneumatischer Radialreifen nach Anspruch 1 oder 2, dadurch gekennzeichnet, daß die zusätzliche Cordverstärkungsschicht (5) Cords umfaßt, die aus der besagten zusammengesetzten Faser hergestellt sind, vorausgesetzt, daß ein solcher Cord eine Dehnung bei 2,25 g/d im Reifen von nicht mehr als 8,0 % und eine Festigkeit von nicht weniger als 5,5 g/d hat.

4. Ein pneumatischer Radialreifen nach einem der Ansprüche 1 bis 3, dadurch gekennzeichnet, daß die zusätzliche Cordverstärkungsschicht (5) über wenigstens die ganze äußerste Gürtellage (2) reicht.

**Revendications**

1. Un pneumatique radial comprenant au moins une nappe de carcasse (4) contenant des câblés de fibres organiques agencés parallèlement les uns aux autres et à un angle de câblé de 70 à 90° par rapport à un plan équatorial du pneumatique, au moins deux couches de ceinture (2, 3) superposées autour d'une partie de sommet de la nappe de carcasse (4) et au moins une couche de câblés de renforcement supplémentaire (5) recouvrant au moins chaque partie d'extrémité de la couche de ceinture située la plus à l'extérieur (2), caractérisé en ce que les câblés de ladite nappe de carcasse (4) et/ou de ladite couche de câblés de renforcement supplémentaire (5) comprennent des fibres composites torsadées de structure gaine-âme, ayant chacune une partie d'âme en polyester et une partie de gaine en polyamide, dans lesquelles le polyester, formant la partie d'âme, a une viscosité intrinsèque (I.V.) non inférieure à 0,8, le rapport en poids entre la partie d'âme et l'ensemble de la partie d'âme et de la partie de gaine étant compris entre 0,3 et 0,9, lesdites fibres composites étant enrobées dans un caoutchouc de revêtement contenant au moins 50% de caoutchouc polyisoprène comme composant de caoutchouc, et en ce que lesdites fibres composites sont torsadées en câbles et torsadées en nappes, de sorte qu'un coefficient de torsion NT, représenté par l'équation suivante est compris entre 0,2 et 0,6:

$$NT = T \times \sqrt{0,139 \times (1/2D)/\rho} \times 10^{-3}$$

où T correspond au nombre de torsion du câblé en tours/10 cm, $\rho$ représente la densité spécifique de la fibre et D correspond au denier total du câblé.

2. Un pneumatique selon la revendication 1, caractérisé en ce que ledit rapport en poids entre la partie d'âme et l'ensemble de la partie d'âme et de la partie de gaine est compris entre 0,5 et 0,6.

3. Un pneumatique radial selon les revendications 1 ou 2, caractérisé en ce que la couche câblé de renforcement supplémentaire (5) comprend des câblés composés des dites fibres composites, à condition qu'un tel câblé ait un allongement à 2,25 g/d dans le pneumatique ne dépassant pas 8,0% et une résistance non inférieure à 5,5 g/d.

4. Un pneumatique radial selon l'une quelconque des revendications 1 à 3, caractérisé en ce que la couche de câblés de renforcement supplémentaire (5) s'étend sur au moins l'ensemble de la couche de ceinture située la plus à l'extérieur (2).

17

## FIG_1

## FIG_2